# EUROPEAN PATENT APPLICATION

(11) **EP 4 641 892 A1**
(43) Date of publication of application: **29.10.2025**
(21) Application number: 23909405.5
(22) Date of filing: 26.09.2023
(51) Int. Cl.: H02K 9/06, H02K 9/04, B64D 33/10, F16C 37/00

(54) **POWER DEVICE HAVING DUAL AIR-COOLING HEAT DISSIPATION CHANNELS, AND AIRCRAFT COMPRISING SAME**

(30) Priority: 25.12.2022 CN 202223463637 U; 28.07.2023 CN 202310937302
(71) Applicant: Autoflight (Kunshan) Co., Ltd., Suzhou, Jiangsu 215345 (CN)
(72) Inventor: TIAN, Yu, Suzhou, Jiangsu 215345 (CN); XI, Jinping, Suzhou, Jiangsu 215345 (CN)
(74) Representative: MERH-IP Matias Erny Reichl Hoffmann Patentanwälte PartG mbB
(86) International application number: PCT/CN2023/121421
(87) International publication number: WO 2024/139470

(57) **Abstract**

This invention belongs to the technical field of aircraft, and discloses a power device with dual air-cooling channels and an aircraft comprising the same. The power device with dual air-cooling channels comprises a rotor, a stator, a bearing housing, and a centrifugal fan. The rotor is placed inside a housing, with a first airflow channel formed between the housing and the rotor. The stator is arranged opposite and rotatably connected to the rotor. The stator is fitted over the bearing housing. The centrifugal fan is disposed atop the stator and rotor. A second airflow channel is formed among the stator, the bearing housing, and the centrifugal fan. The power device with dual air-cooling channels effectively reduces the temperature of both the power device and control unit, extending the service life of the power device.

## Description

### FIELD OF THE DISCLOSURE

The present invention relates to the field of aircraft, specifically to a power device with dual air-cooling channels and an aircraft comprising the same.

### BACKGROUND OF THE INVENTION

Air-cooling structures have always been a bottleneck in motor heat dissipation. Among the three major cooling methods - water cooling, oil cooling, and air cooling - air cooling has consistently exhibited the lowest heat transfer efficiency but the lightest weight. Achieving higher cooling performance necessitates adding more materials to increase heat dissipation surface area. Hence, leveraging the advantages of air cooling in aircraft to overcome thermal bottlenecks becomes critically important. Thus, there is an urgent need to resolve the bottleneck in aircraft power thermal management and design a motor structure with higher heat dissipation efficiency without adding extra weight.

### SUMMARY OF THE INVENTION

The purpose of the present invention is to provide a power device with dual air-cooling channels, which has a simple structure and can achieve a higher heat dissipation efficiency.

To achieve this purpose, the present invention adopts the following technical solutions:
The present invention provides a power device with dual air-cooling channels, comprising:
a rotor disposed within a housing, wherein a first airflow channel is formed between the housing and the rotor;
a stator arranged opposite and rotatably connected to the rotor;
a bearing housing, wherein the stator is sleeved over the bearing housing;
a centrifugal fan mounted atop the stator and the rotor;
wherein a second airflow channel is formed among the stator, the bearing housing, and the centrifugal fan.

Preferably, further comprising an ESC module fixed below the bearing housing; an initial airflow reaches the ESC module, enters an interface between the rotor and the housing, flows through a gap between the housing and the rotor along a direction parallel to a rotation central axis, and is then discharged from the housing after absorbing heat.

Preferably, an initial airflow of the first airflow channel reaches the ESC module, enters an interface between the rotor and the housing, flows along a direction perpendicular to the rotation central axis across an end of the stator adjacent to the bearing housing, then flows through a space between the stator and the bearing housing along a direction parallel to the rotation central axis, and is discharged via the centrifugal fan after absorbing heat.

Preferably, an initial airflow of the second airflow channel reaches the ESC module, enters an interface between the rotor and the housing, flows through a gap between the rotor and the stator along a direction parallel to the rotation central axis, and is discharged via the centrifugal fan after absorbing heat.

Preferably, a propeller is mounted atop the centrifugal fan, and the initial airflow of the first airflow channel is generated by the propeller and/or the centrifugal fan.

Preferably, the initial airflow of the second airflow channel is generated by the centrifugal fan and/or the propeller.

Preferably, the centrifugal fan comprises a plurality of curved blades arranged at intervals.

Preferably, the bearing housing is internally provided with a plurality of longitudinally staggered heat dissipation fins, and heat dissipation zones are formed between adjacent fins.

Preferably, the heat dissipation fins comprise long fins connected to an outer wall of the bearing housing and short fins connected to an inner wall of the bearing housing, the long fins and the short fins being alternately spaced.

The present invention further provides an aircraft, comprising the power device with dual air-cooling channels described above, wherein the power device is mounted on an arm of the aircraft, and the arm is provided with an opening for receiving a propeller-generated airflow.

The beneficial effects of the present invention are as follows: the dual air-cooling channel power device in the present invention features two heat dissipation airflow channels. A first airflow channel is formed between the housing and the rotor, while a second airflow channel is formed among the stator, the bearing housing, and the centrifugal fan. When an airflow reaches the interface between the rotor and the housing, one path enters the first airflow channel pressurized by the propeller to dissipate heat from the rotor, reducing the rotor temperature. This establishes a greater temperature difference between the rotor and the stator, enhancing the heat radiation transfer between them. The other path passes through the second airflow channel composed of gaps between the stator and the bearing housing, as well as between the rotor and the stator. Accelerated and pressurized by the centrifugal fan, this airflow is centrifugally discharged.

Simultaneously, the long and the short heat dissipation fins on the bearing housing amplify the cooling effect. Motors equipped with dual air-cooling channels effectively reduce temperatures in both the motor and the control unit, extending the power device's service life. The control unit temperature decreases by 20% after dual air-cooling channel treatment, while simultaneous internal and external motor cooling through these channels further reduces motor temperature by 10%.

### BRIEF DESCRIPTION OF DRAWINGS

Figure 1 is a schematic diagram of the flow direction of the first airflow channel of the power device with dual air-cooling heat dissipation channels of the present invention;
Figure 2 is a schematic diagram of the flow direction of the second airflow channel of the power device with dual air-cooling heat dissipation channels of the present invention;

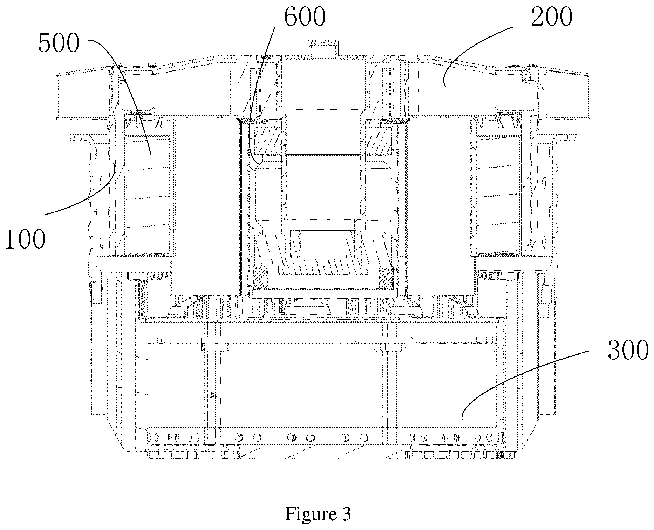

Figure 3 is an overall schematic diagram of the power device with dual air-cooling heat dissipation channels of the present invention;

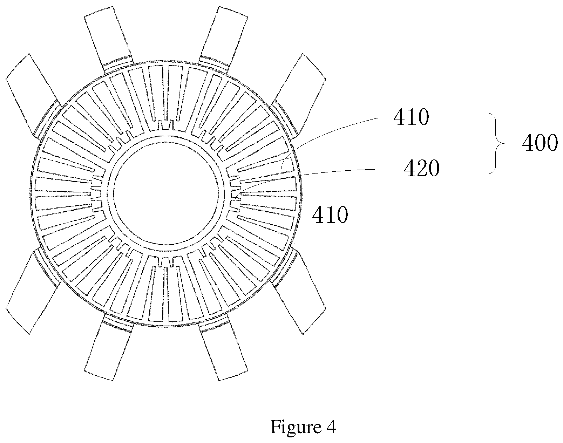

Figure 4 is a schematic diagram of the long heat dissipation fins and of the short heat dissipation fins of the bearing housing of the present invention.

### DETAILED DESCRIPTION

To clarify the objectives, technical solutions, and advantages of the present invention, various embodiments of the invention will be described in detail below with reference to the accompanying drawings. However, those of ordinary skill in the art will appreciate that numerous technical details are set forth in the embodiments to provide a better understanding of the present invention. Nevertheless, the technical solutions claimed in the claims of the present invention may be implemented even without these technical details and without various modifications and variations based on the following embodiments.

Unless the context dictates otherwise, the words "comprise", "include", and variations thereof such as "comprising", "including", and "having" throughout the specification and claims shall be interpreted in an open, inclusive sense, i.e. as "including but not limited to".

The embodiments of the invention will be described in detail below with reference to the drawings for clearer understanding of its objectives, features, and advantages. It should be understood that the embodiments illustrated in the drawings do not limit the scope of the invention but are intended to explain the substantive content of its technical solutions.

References throughout the specification to "one embodiment" or "an embodiment" mean that a specific feature, structure, or characteristic described in connection with the embodiment is included in at least one embodiment. Thus, appearances of "in one embodiment" or "in an embodiment" in various places throughout the specification are not necessarily all referring to the same embodiment. Furthermore, specific features, structures, or characteristics may be combined in any suitable manner in one or more embodiments.

The singular forms "a", "an", and "the" as used in the specification and appended claims include plural referents unless the context clearly dictates otherwise. It should be noted that the term "or" is generally used in its inclusive sense meaning "and/or" unless the context clearly dictates otherwise.

In the following description, directional terms such as "front", "rear", "left", "right", "outer", "inner", "outward", "inward", "up", and "down" are used for clarity in illustrating the structure and operation of the invention. These terms should be understood as convenient expressions rather than limiting terms.

### First Embodiment

The first embodiment of the present invention provides a dual air-cooling channel power device.

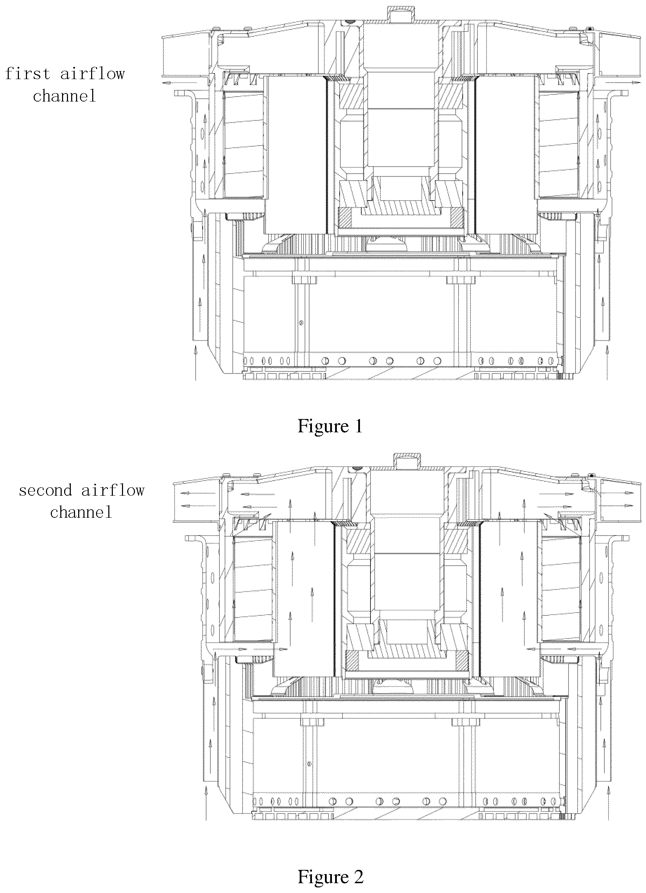

As shown in FIG. 1, the power device comprises a rotor 100, a stator 500, a bearing housing 600, and a centrifugal fan 200. The rotor 100 is placed within a housing, with a first airflow channel formed between the housing and the rotor 100. The stator 500 is arranged opposite and rotationally connected to the rotor 100. The stator 500 is mounted around the bearing housing 600. The centrifugal fan 200 is disposed above the stator 500 and the rotor 100. A second airflow channel is formed among the stator 500, the bearing housing 600, and the centrifugal fan 200.

Furthermore, the power device comprises an ESC module 300 fixed below the bearing housing 600. An initial airflow of the first airflow channel reaches the ESC module 300, it then enters the interface between the rotor 100 and the housing, flows along a direction parallel to the rotational central axis through the gap between the housing and the rotor 100, and is then discharged from the housing after absorbing heat.

Continuing with FIG. 1, an initial airflow of the second airflow channel reaches the ESC module 300, it then enters the interface between the rotor 100 and the housing, flows along a direction perpendicular to the rotational central axis across the annular end surface of the stator 500 adjacent to the bearing housing 600, then flows along a direction parallel to the rotational central axis through the gap between the stator 500 and the bearing housing 600. The heat-absorbed airflow is subsequently discharged through the centrifugal fan 200.

Due to the gap between the rotor 100 and stator 500, an alternative scenario exists: an initial airflow of the second airflow channel reaches the ESC module 300, it then enters the rotor-casing interface, flows along a direction parallel to the rotational central axis through the gap between the rotor 100 and stator 500, and is then discharged through the centrifugal fan 200 after absorbing heat.

Furthermore, a propeller is disposed above the centrifugal fan 200. The initial airflow of the first airflow channel is generated by the propeller and/or the centrifugal fan 200, while the initial airflow of the second airflow channel is generated by the centrifugal fan 200 and/or the propeller.

Additionally, the centrifugal fan 200 comprises multiple curved blades arranged circumferentially at intervals. This configuration increases the linear velocity at the fan's working surface, thereby enhancing its heat dissipation capability.

During operation, the propeller creates positive pressure at the air inlet, while the centrifugal fan 200 generates negative pressure. The combined effect improves the air intake capacity of the second airflow channel.

Furthermore, the bearing housing 600 comprises a plurality of heat dissipation fins 400 arranged in a longitudinally staggered pattern. These staggered fins form heat dissipation zones to improve the cooling efficiency of the second airflow channel.

Moreover, the heat dissipation fins 400 comprise long fins 410 connected to the outer wall of the bearing housing 600 and short fins 420 connected to its inner wall. The long fins 410 and the short fins 420 are alternately arranged at intervals.

### Second Embodiment

The second embodiment of the present invention provides an aircraft comprising the dual air-cooling channel power device described above. The power device is mounted on an aircraft arm provided with an opening for receiving a propeller-generated airflow.

The foregoing embodiments merely exemplify the principles and efficacy of the present invention and are not intended to limit its scope. Any person skilled in the art may modify or alter these embodiments without departing from the intended purpose of the present invention. Therefore, all equivalent modifications or alterations made by those with ordinary skill in the art without departing from the spirit disclosed herein shall remain covered by the claims of the present invention.

## Claims

1. A power device with dual air-cooling channels, comprising:
a rotor disposed within a housing, wherein a first airflow channel is formed between the housing and the rotor;
a stator arranged opposite and rotatably connected to the rotor;
a bearing housing, wherein the stator is sleeved over the bearing housing;
a centrifugal fan mounted atop the stator and the rotor;
wherein a second airflow channel is formed among the stator, the bearing housing, and the centrifugal fan.

2. The power device according to claim 1, further comprising an ESC module fixed below the bearing housing; an initial airflow of the first airflow channel reaches the ESC module, enters an interface between the rotor and the housing, flows through a gap between the housing and the rotor along a direction parallel to a rotation central axis, and is then discharged from the housing after absorbing heat.

3. The power device according to claim 1, wherein an initial airflow of the second airflow channel reaches the ESC module, enters an interface between the rotor and the housing, flows along a direction perpendicular to the rotation central axis across an end of the stator adjacent to the bearing housing, then flows through a space between the stator and the bearing housing along a direction parallel to the rotation central axis, and is discharged via the centrifugal fan after absorbing heat.

4. The power device according to claim 3, wherein the initial airflow of the second airflow channel reaches the ESC module, enters the interface between the rotor and the housing, flows through a gap between the rotor and the stator along the direction parallel to the rotation central axis, and is discharged via the centrifugal fan after absorbing heat.

5. The power device according to claim 2, wherein a propeller is mounted atop the centrifugal fan, and the initial airflow of the first airflow channel is generated by the propeller and/or the centrifugal fan.

6. The power device according to claim 5, wherein the initial airflow of the second airflow channel is generated by the centrifugal fan and/or the propeller.

7. The power device according to claim 1, wherein the centrifugal fan comprises a plurality of curved blades arranged at intervals.

8. The power device according to claim 1, wherein the bearing housing is internally provided with a plurality of longitudinally staggered heat dissipation fins, and heat dissipation zones are formed between adjacent heat dissipation fins.

9. The power device according to claim 8, wherein the heat dissipation fins comprise long fins connected to an outer wall of the bearing housing and short fins connected to an inner wall of the bearing housing, the long fins and the short fins being alternately spaced.

10. An aircraft, comprising the power device with dual air-cooling channels according to any one of claims 1 to 9, wherein the power device is mounted on an arm of the aircraft, and the arm is provided with an opening for receiving a propeller-generated airflow.
